(19) Europäisches Patentamt / European Patent Office / Office européen des brevets

(11) **EP 3 524 332 A1**

(12) **DEMANDE DE BREVET EUROPEEN**

(43) Date de publication:
**14.08.2019 Bulletin 2019/33**

(51) Int Cl.:
**B01D 45/08** (2006.01)

(21) Numéro de dépôt: **19156366.7**

(22) Date de dépôt: **11.02.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **12.02.2018 FR 1851162**

(71) Demandeur: **ENAG**
**29000 Quimper (FR)**

(72) Inventeurs:
• **DUFEU, Julien**
**22260 PLOUEC DU TRIEUX (FR)**
• **GOURRET, Nicolas**
**29750 LOCTUDY (FR)**

(74) Mandataire: **Ipside**
**4, rue de Kerogan**
**29337 Quimper Cedex (FR)**

(54) **DISPOSITIF DE SÉPARATION DE PARTICULES TELLES QUE DES EMBRUNS**

(57) Dispositif de séparation de particules (12, 26) comportant :
- une entrée d'air (3) prévue pour déboucher sur l'air extérieur d'un navire intégrant des parois d'entrée d'air qui découpent le chemin d'entrée de l'air destiné à pénétrer dans le navire ;
- une gaine de ventilation (20, 27) montée sur l'entrée d'air (3) ;
- un système de séparation de particules (9) fixé sur les parois d'entrée d'air ;
- un moyen d'occultation de l'entrée de l'air comportant au moins un élément mobile (13) déplaçable entre une conformation ouverte et une conformation fermée, caractérisé en ce que le dispositif comprend :
- un organe de commande de la mise en mouvement dudit au moins un élément mobile (13) entre la conformation ouverte et la conformation fermée ;
- une unité de contrôle (19, 31) connectée à l'organe de commande ;
- au moins un moyen de détermination de la vitesse de l'air dans ladite gaine de ventilation connectée à ladite unité de contrôle (19, 31).

FIG. 2

**Description**

La présente invention est du domaine des équipements de ventilation, typiquement, mais pas exclusivement, destinés à équiper les navires, et concerne en particulier un séparateur de particules solides et liquides, telles que les embruns, les poussières et/ou le sable, capable de fonctionner à vitesse constante.

Les dispositifs de séparation de particules solides et liquides, telles que les embruns (qui sont des gouttes d'eau en suspension dans l'air), les poussières et/ou le sable, sont des dispositifs destinés à filtrer l'air depuis l'extérieur des navires et à éliminer la présence d'eau de mer présente sous forme de fines gouttelettes communément dénommées embruns, mais également à éliminer les particules solides, telles que les poussières ou le sable. De tels dispositifs de séparation de particules intègrent au moins un châssis encadrant une ouverture dans laquelle est positionné un séparateur de particules. Un tel séparateur de particule est constitué d'un ensemble de panneaux comportant des ondulations, aussi appelées ailettes, les ailettes sont empilées les unes à côté des autres et espacés régulièrement. La configuration des ondulations et la distance entre les ailettes des séparateurs de particules conditionnent le piégeage des embruns, des poussières et/ou du sable en suspension dans l'air. Les dispositifs de séparation de particules intègrent, en outre, au moins une canalisation et un ventilateur pour forcer la pénétration d'air dans les canalisations depuis l'extérieur. Les dispositifs de séparation de particules peuvent également être équipés d'une grille en façade occultant partiellement le passage de l'air devant les séparateurs de particules, cette grille comporte des lamelles métalliques fixes et inclinées pour permettre le passage de l'air. Un capot peut être positionné devant la grille lorsque le séparateur de particule n'est pas mis en fonctionnement.

Les dispositifs de séparation de particules peuvent aussi comporter un filtre positionné derrière les panneaux ondulés du séparateur, qui est indispensable lorsque la vitesse de circulation d'air est en dessous du seuil efficace de fonctionnement et qu'une performance de filtration est néanmoins requise.

Parmi les séparateurs de particules connus de l'art antérieur, le séparateur décrit dans la demande FR3030299 peut être cité, il comporte des ailettes disposées en quinconce pour améliorer la séparation des gouttelettes de liquide. Le séparateur d'embruns décrit dans FR3030299 comporte des moyens de réglage de l'espacement des ailettes pour réguler la vitesse d'entrée d'air. Il est typiquement recherché de rester dans une fenêtre de 4,5 à 8 m/s. Cependant, une telle régulation de l'espacement des ailettes est compliquée à mettre en oeuvre en fonction des variations de débit dues à mise en route et/ou la coupure des ventilateurs, et des besoins ressentis dans l'intérieur du navire en terme de ventilation et de température, ou pour optimiser les dépenses énergétiques liés à ces deux derniers paramètres.

Des clapets coupe-feu son également connus de l'art antérieur pour occulter le passage de l'air dans les gaines de ventilation, tels que ceux décrit dans la demande FR 2 656 536. De tels clapets peuvent être fermés à distance par un déclencheur incorporé dans les gaines de ventilation et servent de sécurité grâce à leur fermeture, en empêchant le feu de se propager lors d'un incendie.

Pour pallier tout ou partie des inconvénients de l'état de la technique précité, la présente invention concerne un dispositif de séparation de particules comportant :

- une entrée d'air prévue pour déboucher sur l'air extérieur d'un navire intégrant des parois d'entrée d'air qui découpent le chemin d'entrée de l'air destiné à pénétrer dans le navire ;
- une gaine de ventilation montée sur l'entrée d'air ;
- un système de séparation de particules fixé sur les parois de l'entrée d'air ;
- un moyen d'occultation de l'entrée d'air comportant au moins un élément mobile déplaçable entre une conformation ouverte et une conformation fermée,

caractérisé en ce que le dispositif comprend :

- un organe de commande de la mise en mouvement dudit au moins un élément mobile entre la conformation ouverte et la conformation fermée ;
- une unité de contrôle connectée à l'organe de commande ; et
- au moins un moyen de détermination de la vitesse de l'air dans ladite gaine de ventilation connectée à ladite unité de contrôle.

Dans la conformation ouverte, la position du ou des élément(s) mobile(s) est adaptée pour laisser un passage à l'air, dans la conformation fermée la position des éléments mobiles est adaptée pour faire écran au passage de l'air. En outre, grâce à la configuration du dispositif selon l'invention, il est possible de contrôler en temps donné l'ouverture et la fermeture des éléments mobiles pour maintenir une vitesse de déplacement de l'air constante.

Le système de séparation de particules comporte de préférence un ensemble de profilés configurés avec des ondulations et qui sont qualifiés « d'ailettes » qui sont positionnées de manière empilées les unes derrière les autres, tout en ménageant un espace pour laisser passer les gaz tout en piégeant les particules liquides ou solides.

Dans le cadre de la présente invention le terme « particule » est pris au sens large et désigne les particules solides et les particules liquides, comme par exemple les embruns, les poussières et les sables.

De manière avantageuse, le système de séparation de particules fixé sur les parois de l'entrée d'air du dispositif selon l'invention est un séparateur d'embruns, c'est-à-dire qu'il s'agit d'un système qui vise à éliminer les gouttes d'eau en suspension dans l'air.

La présence du ou des élément(s) mobile(s) dudit moyen d'occultation entre deux conformations permet de faire varier la section efficace « S » de l'entrée d'air et permet de maintenir une vitesse de circulation d'air dans une plage de valeur. Un tel dispositif permet la séparation des particules à pression constante. La variation de la section efficace d'entrée de l'air pour maintenir la vitesse constante permet de réduire la consommation d'énergie, augmenter l'efficacité de la filtration, tout en réduisant le bruit et la dimension des gaines de ventilation. Réaliser le contrôle de la vitesse de circulation d'air en aval du séparateur de particules est plus efficace et plus facilement mis en oeuvre, comparativement aux solutions de l'art antérieur.

Avantageusement, le moyen de détermination de la vitesse de l'air dans la gaine de ventilation est un moyen mesure de différence de pression entre l'extérieur du dispositif (de préférence l'entrée d'air) et l'intérieur du dispositif (de préférence dans la gaine de ventilation). Avantageusement, le moyen de détermination de la vitesse de l'air dans la gaine de ventilation comprend un capteur de pression externe de l'air positionné sur la partie externe du dispositif de séparation de particules et un capteur de pression interne de l'air positionné sur les parois internes de la gaine de ventilation, lesdits capteurs de pression interne et externe étant connectés à ladite unité de contrôle. Alternativement, ou en combinaison, le moyen de détermination de la vitesse de l'air dans la gaine de ventilation est avantageusement un moyen de mesure de la vitesse des pâles du système de ventilation prévu pour provoquer l'aspiration (ou le refoulement) de l'air dans la gaine de ventilation, connectés à ladite unité de contrôle. Alternativement, ou en combinaison, le moyen de détermination de la vitesse de l'air dans la gaine de ventilation est avantageusement un moyen de mesure de la vitesse de l'air dans la gaine choisi parmi les éléments suivants : un tube de pitot, un anémomètre tel qu'un anémomètre à hélices ou à coupelles, un anémomètre à fil chaud, un anémomètre à ultrason et un anémomètre à laser.

Avantageusement, le moyen d'occultation de l'entrée de l'air du dispositif de séparation de particule selon l'invention est positionné en aval du système de séparation de particules. Les inventeurs ont montré que le positionnement en aval du moyen d'occultation était préférable, étant donné qu'il permet une maintenance facilitée car il est possible d'effectuer un nettoyage sans mettre de l'eau dans la gaine.

Dans le cadre de la présente invention les termes « en aval » et « en amont » se définissent par rapport au sens de circulation d'air prévu dans le dispositif de séparation de particules en fonctionnement.

Avantageusement, le dispositif selon l'invention comporte une grille (aussi qualifiée de grille pare-pluie) positionnée en amont du moyen d'occultation de l'entrée de l'air et du système de séparation de particules ; et ladite grille comprend des lamelles fixes métalliques, et inclinées par rapport au plan de la grille. Une telle grille permet de protéger les éléments sensibles et limite la pénétration des particules solides dans le système de séparation de particule et les gaines de ventilation.

Avantageusement, le ou les élément(s) mobile(s) du moyen d'occultation de l'entrée de l'air comprennent des volets mobiles, qui sont montés mobiles en rotation sur les parois de l'entrée d'air, entre la conformation ouverte, dans laquelle les volets sont inclinés de sorte que l'air peut circuler entre les volets, et la conformation fermée, dans laquelle les volets sont inscrits sensiblement dans un plan pour faire écran au passage de l'air. Lorsque les axes longitudinaux des volets sont disposés sur un même plan de forme sensiblement rectangulaire, l'ensemble forme un panneau à volets mobiles. L'utilisation d'un tel panneau à volets mobiles, par mise en mouvement des volets s'est avérée une solution particulièrement efficace parce qu'il est facile à mettre en oeuvre, à fabriquer et à monter, et également a maintenir en fonctionnement et d'une grande fiabilité. Selon des modes de réalisation de l'invention, il peut être recouru à la mise en mouvement de certains volets, tandis que d'autres restent en position alignés par rapport au plan du panneau.

De manière alternative, le moyen d'occultation de l'entrée de l'air peut être un système à base de volets roulants ou de portes sectionnelles, ou tout autre système d'obstruction d'air.

Avantageusement les volets mobiles sont montés pivotant autour de l'axe longitudinal desdits volets mobiles. Les éléments mobiles, qui sont selon les modes de réalisation préférés selon l'invention les volets mobiles du dispositif selon l'invention fonctionnent de la sorte comme des clapets qui peuvent être rapidement rabattus pour occulter le passage de l'air, aux fins de réguler finement la perte de charge dans les conduits du dispositif de séparation de particules.

Avantageusement l'entrée d'air du dispositif de séparation de particules selon l'invention comprend deux fenêtres, le système de séparations de particules du dispositif de séparation de particules selon l'invention comprend deux organes séparateur de particules, le moyen d'occultation de l'entrée de l'air comprend deux panneaux comprenant des volets mobiles, et le dispositif de séparation de particules comprend deux sous-unités, chaque sous-unité comprenant les éléments suivant et étant configurée de la manière suivante :

-   une des susdites deux fenêtres qui est prévue pour déboucher sur l'air extérieur d'un navire, ladite fenêtre comprend un châssis ;

- un des susdites deux organes séparateur de particules comprenant des d'ailettes et étant fixé latéralement sur ledit châssis de ladite fenêtre ;
- un des susdits deux panneaux comprenant des volets et étant positionnée en amont du susdit organe séparateur de particules ;

tel que les volets mobiles des panneaux comprenant des volets mobiles sont capables d'être actionnés indépendamment d'un panneau à l'autre, entre une conformation ouverte et une conformation fermée. Les inventeurs ont démontrés que cette solution qui permet de fermer l'entrée d'air par occultation d'une fenêtre indépendamment d'une autre est particulièrement efficace et facile à mettre en oeuvre.

Avantageusement, l'entrée d'air du dispositif de séparation de particules selon l'invention comprend six fenêtres, le système de séparations de particules du dispositif de séparation de particules selon l'invention comprend six organes séparateur de particules, le moyen d'occultation de l'entrée de l'air comprend six panneaux comprenant des volets mobiles, et le dispositif de séparation de particules comprend six sous-unités, chaque sous-unités comprenant les éléments suivants et étant configurée de la manière suivante :

- une des susdites six fenêtres qui est prévue pour déboucher sur l'air extérieur d'un navire, ladite fenêtre comprend un châssis ;
- un des susdits six organes séparateur de particules comprenant des d'ailettes et étant fixé latéralement sur ledit châssis de ladite fenêtre ;
- un des susdits six panneaux comprenant des volets mobiles et étant positionnée en aval du susdit organe séparateur de particules;

tel que les volets mobiles des panneaux comprenant des volets mobiles sont capables d'être actionnés indépendamment d'un panneau à l'autre, entre une conformation ouverte et une conformation fermée. Un tel dispositif qui intègre au moins six sous-ensembles avec l'entrée d'air découpée par six fenêtres et tel que chaque fenêtre intègre une grille à volets mobiles de sorte à pouvoir occulter le passage de l'air uniquement sur au moins une des six fenêtres en laissant les autres ouvertes, est particulièrement efficace et facile à contrôler pour garder une vitesse de l'air constante dans le dispositif. Les six sous-ensembles sont disposés pour former sensiblement un rectangle vu de face.

Alternativement ou en combinaison avec ce qui précède, la présente invention concerne également un ensemble de séparation de particules comprenant deux dispositifs de séparation de particules selon l'invention. Avantageusement l'ensemble de séparation de particules comprend six dispositifs de séparation de particules.

Avantageusement, l'ensemble de séparation de particules selon l'invention est configuré de la manière suivante : chacun desdits dispositifs de séparation de particules comprend une fenêtre comportant un châssis, lesdites fenêtres délimitant l'entrée d'air ; chaque système de séparations de particules des dispositifs de séparation de particules comprend un organe séparateur de particules et les organes séparateurs de particules comprennent des d'ailettes, et sont fixées latéralement sur ledit châssis de ladite fenêtre ; chaque moyen d'occultation de l'entrée de l'air des dispositifs de séparation de particule comporte un panneaux comprenant des volets mobiles en étant positionnée en aval du susdit organe séparateur de particules, et tel que les volets mobiles des panneaux comprenant des volets mobiles sont capables d'être actionnés indépendamment d'un panneau à l'autre, entre une conformation ouverte et une conformation fermée.

De manière avantageuse, le capteur de pression externe est connecté à ladite unité de contrôle par un premier câble de transmission de données, et le capteur de pression interne est connecté à ladite unité de contrôle par un deuxième câble de transmission de données, et un faisceau de câbles de sortie relie l'organe de commande des volets mobiles de chaque sous-unité (ou dispositif de séparation de particule) à l'unité de contrôle. Alternativement, la connectique peut être réalisée par une communication sans fil.

La présente invention concerne également l'utilisation du dispositif de séparation de particules décrit précédemment dans le cadre de l'invention pour éliminer les embruns, dans lequel le système de séparation de particules fixé sur les parois de l'entrée d'air du dispositif est un séparateur d'embruns.

La description détaillée qui suit présente des modes de réalisation de la présente invention, uniquement donnés à titre illustratif et qui ne doivent nullement être interprétés comme limitatifs, et leurs figures annexées parmi lesquelles :

- la figure 1 représente une vue en perspective d'un dispositif de séparation de particules selon l'art antérieur ;
- la figure 2 représente vue de face un ensemble de séparation de particules selon l'invention avec tous les dispositifs de séparation de particules en conformation ouverte ;
- la figure 3 représente vue de face le mode de réalisation de l'ensemble de séparation de particules de la figure 2, avec tous les dispositifs de séparation de particules en conformation fermée ;
- les figures 4 à 10 représentent une vue en perspective du mode de réalisation de l'ensemble de séparation de particules des figures 2 et 3, avec des dispositifs de séparation de particules en conformation fermée et/ou ouvertes ;
- la figure 11 représente l'unité de contrôle et les câblages entre les capteurs et l'organe de commande d'ouverture et de fermeture des volets des panneaux des dispositifs de séparation de particules selon l'invention ;

- la figure 12 représente l'efficacité mesuré d'un séparateur selon l'art antérieur en fonction de la vitesse de l'air ;
- la figure 13 représente l'efficacité mesuré du séparateur selon l'art antérieur en fonction du débit d'air ;
- la figure 14 représente la perte de charge mesuré d'un dispositif de séparation de particules selon l'invention en fonction du débit d'air ;
- la figure 15 représente l'efficacité mesuré du dispositif de séparation de particules selon l'invention en fonction du débit d'air ;
- la figure 16 représente l'efficacité comparée du séparateur selon l'art antérieur et du dispositif de séparation de particules selon l'invention en fonction du débit d'air ;
- la figure 17 représente une vue en coupe d'un système de séparation de particules intégré dans le séparateur de particules selon l'art antérieur (figure 1) ou dans les dispositifs de séparation de particules selon l'invention ; et
- la figure 18 représente une vue en coupe longitudinale d'un mode de réalisation du dispositif de séparation de particules selon l'invention, intégrant une régulation de la vitesse dans la gaine en fonction de la mise en route et du fonctionnement du système de ventilation.

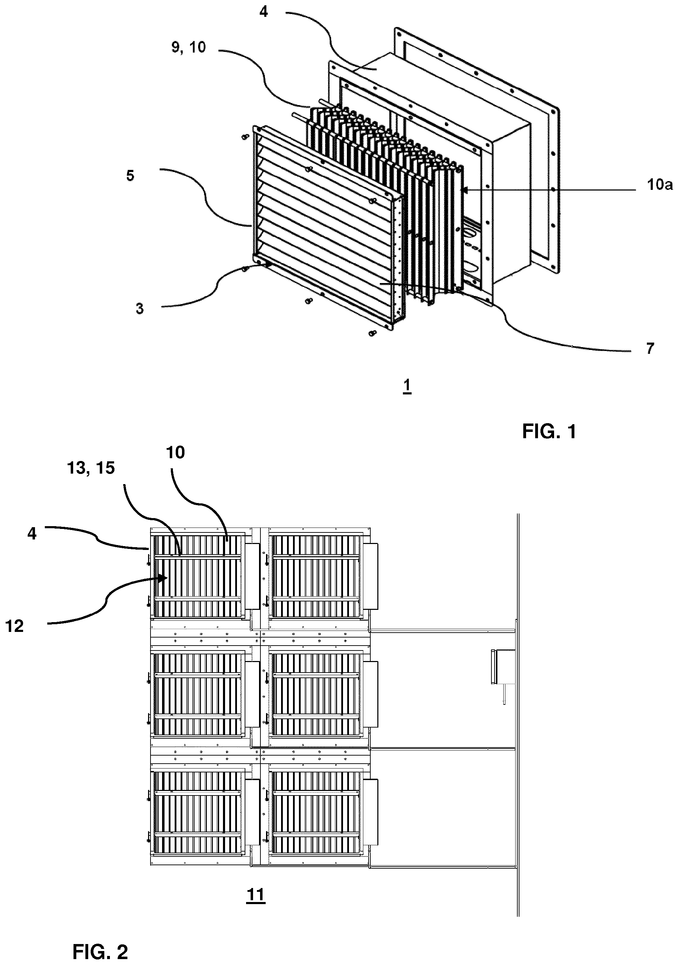

La figure 1 montre une vue en perspective d'un séparateur de particules 1 selon l'art antérieur comprenant une entrée d'air 3, une fenêtre 4 intégrant des parois qui délimitent les contours de l'entrée d'air 3 et une grille 5 qui ferme en façade l'entrée d'air 3. La grille 5 comprend un ensemble de lamelles fixes métalliques 7 inclinées par rapport au plan de la grille. Le séparateur de particules 1 comprend un système de séparation de particules 9 comprenant un organe de séparation de particules 10, lequel organe de séparation de particules 10 comprend des ailettes 10a.

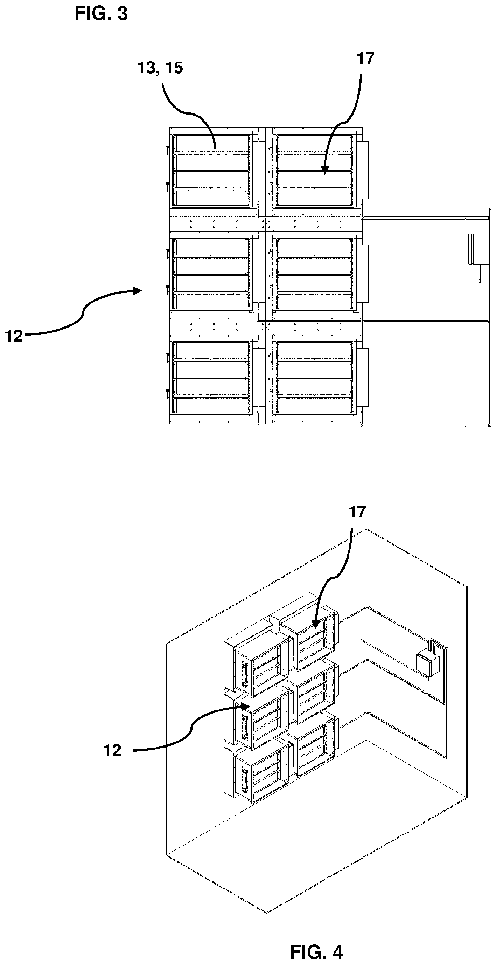

La figure 2 montre un mode de réalisation d'un ensemble de séparation de particules 11 selon un mode de réalisation de l'invention intégrant plusieurs dispositifs de séparation de particules 12 selon l'invention comprenant chacun une fenêtre 4 qui délimite l'entrée d'air 3, et un organe de séparation de particules 10. Un dispositif de séparation de particules 12 comprend un moyen d'occultation de l'entrée d'air comprenant un panneau comportant un ensemble d'éléments mobiles 13, composés de volets mobiles 15 selon ce mode de réalisation, et désigné panneaux 17 comportant des volets mobiles. Lesdits volets 15 sont mobiles entre une conformation ouverte où les volets mobiles 15 sont inclinés horizontalement par rapport au plan du panneau, telle que cela est représenté sur la figure 2, et une conformation fermée dans laquelle les volets mobiles 7 sont inscrits sensiblement dans un plan pour faire écran au passage de l'air tel que cela est représenté sur la figure 3.

Les figures 2 et 3 montrent un mode de réalisation particulièrement préféré dans lequel L'ensemble de séparation de particules 11 comporte six dispositif de séparation de particules 12 dont l'ouverture ou la fermeture des volets mobiles 15 des panneaux peut être commandée indépendamment d'un panneau à l'autre pour modifier la section efficace de l'entrée d'air « S ». La section efficace de l'entrée d'air « S » est contrôlée en fermant en même temps les volets mobiles 15 d'une ou de plusieurs dispositifs de séparation de particules 12.

La perte de charge des séparateurs de particules étant liée à la vitesse d'air, la régulation se fait à partir d'une mesure de pression différentielle. La mesure de pression différentielle est effectuée par la mise en oeuvre d'un capteur de pression externe sur la partie externe du dispositif de séparation de particules en contact du milieu extérieur (l'air qui entoure le navire), et d'un capteur de pression interne de l'air positionné sur les parois internes d'une gaine de ventilation relié à l'entrée d'air du dispositif de séparation de particules. Ladite gaine de ventilation est branchée sur la ventilation, la climatisation et/ou le chauffage de tout ou partie de l'intérieur du navire équipé par le séparateur de particules. Une unité de contrôle 19 paramétrée avec une valeur seuil de pression différentielle, reçoit les informations des susdits capteurs de pression, traite les données et transmet des ordres à un organe de commande (par exemple un moteur, un servomoteur, un vérin pneumatique, hydraulique ou électrique, voire un ressort) des volets mobiles 15 de chaque dispositif de séparation de particules 12.

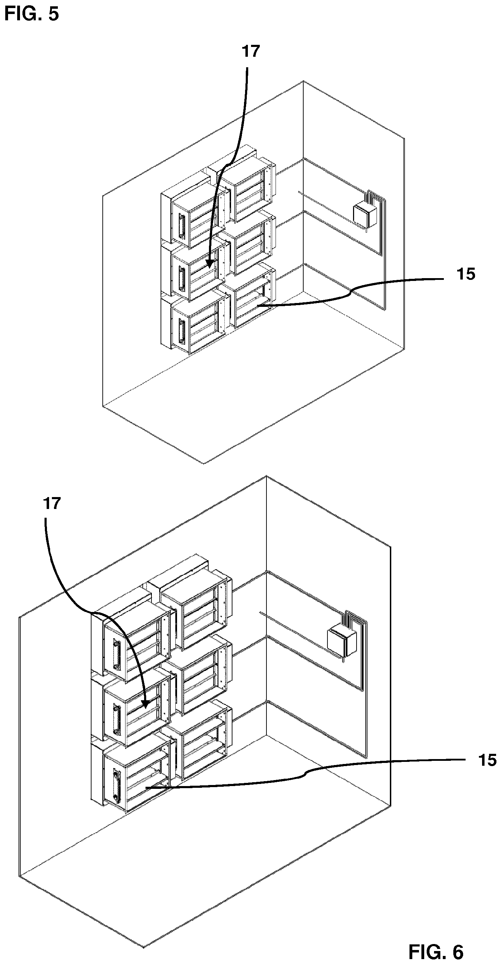

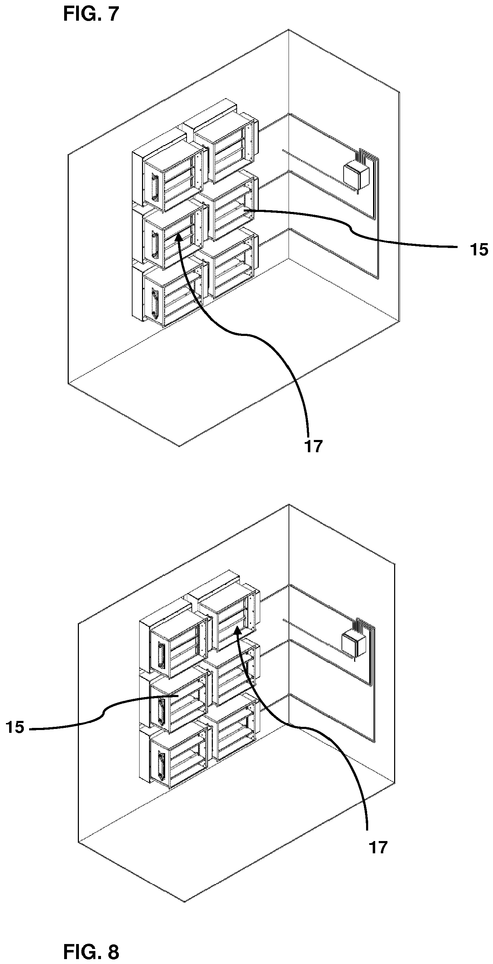

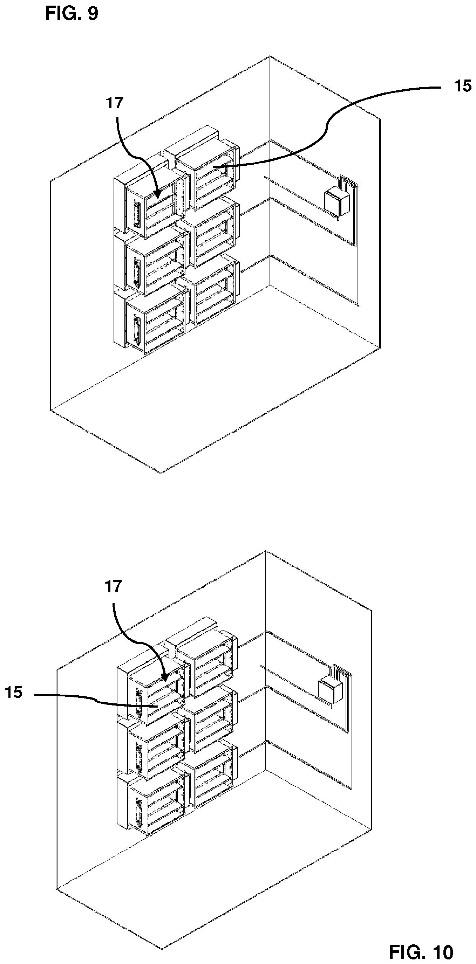

Une ouverture progressive des panneaux 17 de chaque dispositif de séparation de particules est opérée par l'ouverture des volets mobiles 15, progressivement dispositif de séparation de particules 12 par dispositif de séparation de particules 12 (il est également possible de fermer ou d'ouvrir plusieurs sous-unités simultanément), comme montré sur les figures 4 à 10. Sur la figure 4 le débit est nul, il n'y a pas de ventilation tous les panneaux 17 comprenant des volets mobiles 15 sont dans la conformation fermée. L'ouverture des panneaux 17 comprenant des volets mobiles se fait progressivement, sur la figure 5 un desdits panneaux 17 comprenant des volets mobiles est dans la conformation ouverte. Le débit augmente, la perte de charge augmente jusqu'à atteindre la valeur seuil qui correspond à la configuration avec deux panneaux en conformation ouverte illustrée sur la figure 6, selon un mode de réalisation selon l'invention. A ce stade, la perte de charge atteint la valeur seuil, il y a ordre d'ouvrir les volets d'un troisième panneau 17 comprenant des volets mobiles, pour passer à la configuration illustrée sur la figure 7. Lorsque le débit continue à augmenter, l'ouverture des volets 15 des panneaux 17 qui passent en conformation ouverte se fait comme montré à la figure 9, puis à la figure 10. Dans la configuration illustrée à la figure 10, l'ensemble des panneaux est en conformation ouverte avec une section efficace maximale et un débit maximal. A l'inverse, lorsque le débit diminue la perte de charge diminue jusqu'à la valeur seuil, l'unité de commande après avoir traitée les informations issue des capteur de pression interne et externe, ordonne à un organe de commande des volets mobiles 15 de faire passer les panneaux à volets mobiles des dispositif de séparation de particules 12 dans la conformation fermée, en passant par les configurations illustré des figures 9 à 6, jusqu'à la figure 5 ou le débit atteint une valeur minimum et la figure 4 dans laquelle le débit est nul.

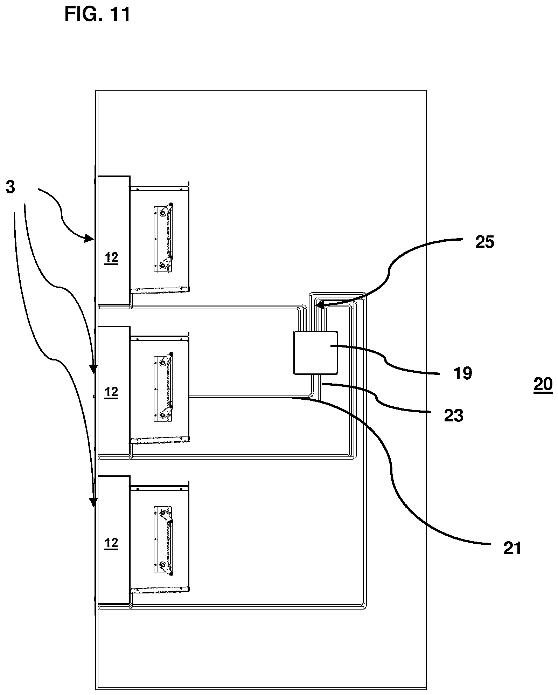

La figure 11 montre l'unité de contrôle 19 placée dans une gaine de ventilation 20 montée sur l'entrée d'air 3, l'unité de contrôle 19 est reliée :

- au capteur de pression externe par un premier câble de transmission de données (pourrait être en sans fil) 21 ;
- au capteur de pression interne par un deuxième câble de transmission de données (pourrait être en sans fil) 23 ; et
- à un faisceau de câbles de sortie 25 relié à l'organe de commande des volets mobiles 15 de chaque dispositif de séparation de particules 12.

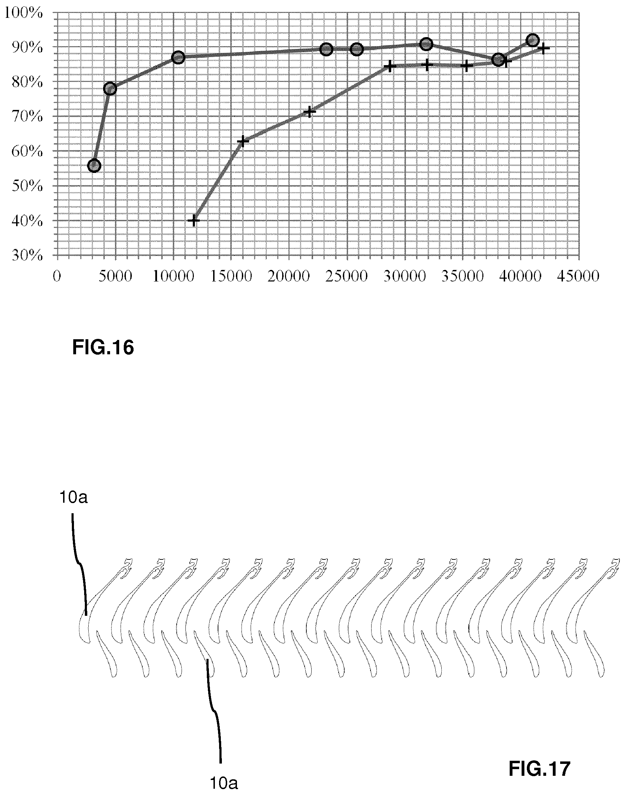

L'efficacité de l'ensemble de séparation de particules 11 selon l'invention a été évaluée par des tests comparatifs avec un séparateur de particules 1 de l'art antérieur intégrant un système de séparation de particule 9 comportant un organe de séparation de particule 10, connu sous la référence commerciale WSX35™ et commercialisé par la société Alupro® et dont une vue en coupe des ailettes 10a est illustré à la figure 17, qui ne comporte pas de moyen d'occultation de l'entrée de l'air adapté pour faire varier la section efficace « S » de l'entrée d'air.

La mesure de l'efficacité est effectuée de la façon suivante : une masse d'eau m1 est pulvérisée devant l'entrée d'air du dispositif, une masse d'eau m2 est récupérée en amont (quantité d'eau non passée au travers du système de séparation de particule) et une masse d'eau m3 est récupérée par le système de séparation de particules. L'efficacité en pourcent s'exprime de la façon suivante :

$$\eta = m3 / (m1 - m2)$$

Ainsi, l'efficacité du séparateur de particules est définie comme le quotient de la masse d'eau (des embruns) récupérée par le système de séparation de particules sur la masse d'eau projetée sur le système de séparation de particules.

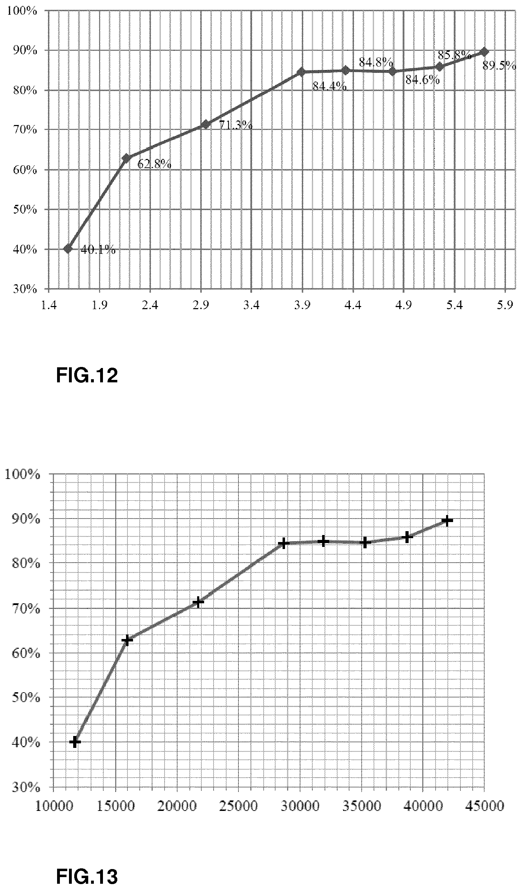

La figure 12 présente l'efficacité du séparateur de particules 1 selon l'art antérieur en fonction de la vitesse d'air exprimé en m/s. La figure 13 présente l'efficacité du séparateur de particule 1 en fonction du débit volumique d'air exprimé en $m^3$/h. Dans le cas du séparateur de particules selon l'art antérieur, l'efficacité est basse (inférieure à 80%) à des vitesses ou des débits faibles.

Le débit volumique « Q » ($m^3.h^{-1}$) est fonction de la surface, c'est-à-dire de la section efficace « S » ($m^2$) d'entrée d'air, et de la vitesse de l'air « V » ($m.h^{-1}$) : Q=SxV

La perte de charge des séparateurs de particules étant liée à la vitesse d'air, la régulation se fait à partir d'une mesure de pression différentielle $\Delta P$ (Pa).

Le tableau 1 montre des essais sur l'ensemble de séparation de particules 11 (équipé de systèmes de séparations de particule intégrant l'organe de séparation de particule WSX35™ illustrés à la figure 17) selon l'invention, avec une mesure de la pression différentielle, en faisant varier le nombre de dispositifs de séparation de particules 12 dont les volets mobiles 15 des panneaux 17 sont en conformation fermée.

Tableau 1.

| Débit « Q » ($m^3.h^{-1}$) | $\Delta P$ (Pa) | Nombre de panneaux fermés |
|---|---|---|
| 41019.1 | 80.7 | 0 |
| 38011.9 | 70.5 | 0 |
| 31793.9 | 79.0 | 1 |
| 25817.7 | 88.0 | 2 |
| 23167.9 | 73.0 | 2 |
| 16658.7 | 78.0 | 3 |
| 10390.3 | 81.6 | 4 |
| 9586.3 | 63.0 | 4 |
| 4508.0 | 75.1 | 5 |
| 3100.8 | 45.6 | 5 |

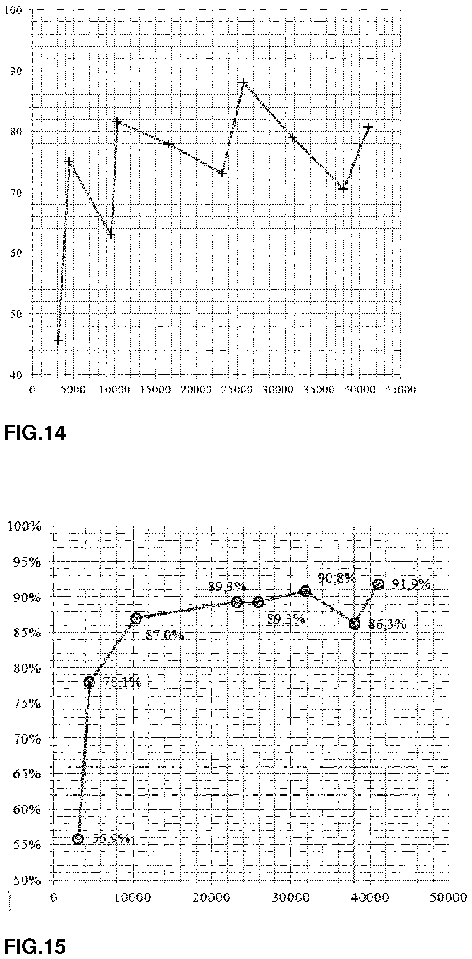

Une régulation doit être opérée pour maintenir la valeur de la perte de charge autour de 80 Pa. Dans le cas d'une diminution du débit, lorsque la valeur de perte de charge diminue en atteignant une valeur proche de 70, voire 60 Pa, la fermeture des panneaux est opérée pour compenser cette variation et revenir à une valeur de perte de charge supérieure à 80% (voir la figure 14, qui montre la valeur de perte de charge $\Delta P$ (Pa) en ordonnée en fonction du débit « Q » ($m^3.h^{-1}$) en abscisse).

La courbe avec des points de forme circulaire représentée sur les figures 15 et 16 présente l'efficacité (en ordonnée) de l'ensemble de séparation de particules 11 selon l'invention en fonction du débit de ventilation « Q » ($m^3.h^{-1}$) en abscisse.

Sur la figure 16, une deuxième courbe avec des points en forme de croix, reporte les valeurs obtenues en effectuant la mesure sur le séparateur de particules 1 selon l'art antérieur. L'ensemble de séparation de particules 11 selon l'invention permet de garder une efficacité supérieure à 80%, même à des débits inférieurs à 25000 $m^3.h^{-1}$.

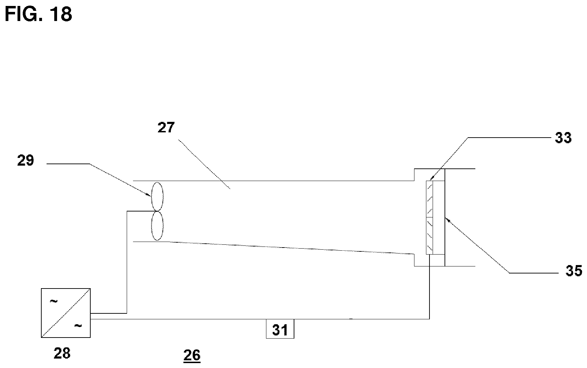

Selon un autre mode de réalisation du dispositif 26 selon la présente invention, illustré à la figure 18, le moyen de détermination de la vitesse de l'air dans la gaine de ventilation 27 comprend, d'une part, un variateur de vitesse 28 adapté pour contrôler la vitesse des pâles 29 d'un système de ventilation positionné en aval dans une gaine de ventilation 20 pour provoquer l'aspiration de l'air dans la gaine de ventilation, et est, d'autre part, connecté à une unité de contrôle 31 qui pilote un organe de commande (non représenté) de la mise en mouvement de volets mobiles 33 - positionnés devant un système de séparation de particules 35 - entre la conformation ouverte et la conformation fermée. La perte de charge dans la gaine de ventilation 27 est mesurée au préalable en fonction de la configuration de chaque dispositif de séparation de particules 12, les paramètres aérauliques du système de ventilation (intégrant la pâle 29) sont également mesurées et l'ensemble est intégré dans l'unité de contrôle 31.

Lorsqu'une variation du débit de ventilation est demandée par le variateur de vitesse 28 du ventilateur, la fermeture ou l'ouverture des volets 33 est ordonnée en fonction des caractéristiques connues des organes de séparation de particules (système de séparation de particules 35) positionnés en amont, afin de garantir une efficacité optimale en fonction du débit de ventilation.

## Revendications

1. Dispositif de séparation de particules (12, 26) comportant :

   - une entrée d'air (3) prévue pour déboucher sur l'air extérieur d'un navire intégrant des parois d'entrée d'air qui découpent le chemin d'entrée de l'air destiné à pénétrer dans le navire ;
   - une gaine de ventilation (20, 27) montée sur l'entrée d'air (3) ;
   - un système de séparation de particules (9) fixé sur les parois d'entrée d'air ;
   - un moyen d'occultation de l'entrée de l'air comportant au moins un élément mobile (13) déplaçable entre une conformation ouverte et une conformation fermée,

   **caractérisé en ce que** le dispositif comprend :

   - un organe de commande de la mise en mouvement dudit au moins un élément mobile (13) entre la conformation ouverte et la conformation fermée ;
   - une unité de contrôle (19, 31) connectée à l'organe de commande ;
   - au moins un moyen de détermination de la vitesse de l'air dans ladite gaine de ventilation connectée à ladite unité de contrôle (19, 31).

2. Dispositif de séparation de particules (12) selon la revendication 1, dans lequel le moyen de détermination de la vitesse de l'air dans la gaine de ventilation comprend un capteur de pression externe de l'air positionné sur la partie externe du dispositif de séparation de particules et un capteur de pression interne de l'air positionné sur les parois internes de la gaine de ventilation, lesdits capteurs de pression interne et externe étant connectés à ladite unité de contrôle (19).

3. Dispositif de séparation de particules (12, 26) selon la revendication 1, dans lequel le moyen de détermination de la vitesse de l'air dans la gaine de ventilation (20, 27) comprend, d'une part, un variateur de vitesse (28) adapté pour contrôler la vitesse des pâles (29) d'un système de ventilation prévu pour provoquer l'aspiration, ou le refoulement, de l'air dans la gaine de ventilation (20, 27), et est, d'autre part, connecté à ladite unité de contrôle (19, 31).

4. Dispositif de séparation de particules (12) selon l'une des revendications 1 à 3, dans lequel le moyen d'occultation de l'entrée de l'air du dispositif de séparation de particule est positionné en aval du système de séparation de particules (9).

5. Dispositif de séparation de particules (12) selon l'une des revendications 1 à 4, dans lequel le dispositif comporte une grille (5) positionnée en amont du moyen d'occultation de l'entrée de l'air et du système de séparation de particules (9) ; et ladite grille (5) comprend des lamelles fixes métalliques (7), et inclinées par rapport au plan de la grille (5).

6. Dispositif de séparation de particules (12) selon l'une des revendications 1 à 5, dans lequel le, ou, les éléments mobiles (13) du moyen d'occultation de l'entrée de l'air comprennent des volets mobiles (15), qui sont montés mobiles en rotation sur les parois de l'entrée d'air (3), entre la conformation ouverte, dans laquelle les volets sont inclinés de sorte que l'air peut circuler entre les volets, et la conformation fermée, dans laquelle les volets sont inscrits sensiblement dans un plan pour faire écran au passage de l'air.

7. Dispositif de séparation de particules (12) selon la revendication 6, dans lequel les volets mobiles (15) sont montés pivotant autour de l'axe longitudinal desdits volets mobiles (15).

8. Ensemble de séparation de particules (11) comprenant deux dispositifs de séparation de particules (12) selon l'une des revendications 1 à 7.

9. Ensemble de séparation de particules (12) selon la revendication 8, dans lequel ledit ensemble est configuré :

- chacun desdits dispositifs de séparation de particules comprend une fenêtre (4) comportant un châssis, lesdites fenêtres délimitant l'entrée d'air ;
- chaque système de séparations de particules (9) des dispositifs de séparation de particules comprend un organe séparateur de particules (10) et les organes séparateurs de particules (10) comprennent des d'ailettes (10a), et sont fixées latéralement sur ledit châssis de ladite fenêtre ;
- chaque moyen d'occultation de l'entrée de l'air des dispositifs de séparation de particule comporte un panneaux (17) comprenant des volets mobiles (15) en étant positionnée en aval du susdit organe séparateur de particules (10) ; et

tel que les volets mobiles (15) des panneaux (17) comprenant des volets mobiles sont capables d'être actionnés indépendamment d'un panneau à l'autre, entre une conformation ouverte et une conformation fermée.

10. Ensemble de séparation de particules (12) selon la revendication 2 combinée à la revendication 6 et à l'une des revendications 8 ou 9, dans lequel le capteur de pression externe est connecté à ladite unité de contrôle (19) par un premier câble de transmission de données (21), et le capteur de pression interne est connectés à ladite unité de contrôle (19) par un deuxième câble de transmission de données (23), et un faisceau de câbles de sortie (25) relie l'organe de commande des volets mobiles (15) de chaque dispositif de séparation de particule (12) à unité de contrôle (19).

11. Utilisation du dispositif de séparation de particules (11) selon l'une des revendications 1 à 7 pour éliminer les embruns, dans lequel le système de séparation de particules (9) fixé sur les parois de l'entrée d'air du dispositif est un séparateur d'embruns.

**1**

**FIG. 1**

**11**

**FIG. 2**

FIG. 3

FIG. 4

**FIG. 5**

**FIG. 6**

**FIG. 7**

**FIG. 8**

**FIG. 9**

**FIG. 10**

FIG. 11

**FIG.12**

**FIG.13**

**FIG.14**

**FIG.15**

**FIG.16**

**FIG.17**

10a

10a

FIG. 18

**Europäisches Patentamt**

**European Patent Office**

**Office européen des brevets**

# RAPPORT DE RECHERCHE EUROPEENNE

Numéro de la demande

EP 19 15 6366

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 3 045 399 A1 (ENGIE [FR]) 23 juin 2017 (2017-06-23) | 1-3,5,8, 10,11 | INV. B01D45/08 |
| Y | * page 1, lignes 5-7; revendications 1, 2, 7, 8; figures 1, 2A * | 6,7 | |
| A | | 4,9 | |
| Y | US 2015/135661 A1 (MACDONALD GEORGE [US] ET AL) 21 mai 2015 (2015-05-21) * revendication 1; figures 6, 7 * | 6,7 | |
| A | US 2 016 992 A (DOLLINGER LEWIS L) 8 octobre 1935 (1935-10-08) * figures 5, 6 * | 6,7 | |
| A | US 2017/246575 A1 (SNYDER ROBERT E [US]) 31 août 2017 (2017-08-31) * figure 4 * | 6,7 | |

DOMAINES TECHNIQUES RECHERCHES (IPC)

B01D

Le présent rapport a été établi pour toutes les revendications

| Lieu de la recherche | Date d'achèvement de la recherche | Examinateur |
|---|---|---|
| Munich | 13 juin 2019 | Papageorgiou, Marie |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 15 6366

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-06-2019

| Document brevet cité au rapport de recherche | Date de publication | Membre(s) de la famille de brevet(s) | Date de publication |
|---|---|---|---|
| FR 3045399 A1 | 23-06-2017 | AUCUN | |
| US 2015135661 A1 | 21-05-2015 | AU 2013251543 A1 | 13-11-2014 |
| | | BR 112014026834 A2 | 27-06-2017 |
| | | CA 2870456 A1 | 31-10-2013 |
| | | CN 104246390 A | 24-12-2014 |
| | | EP 2841854 A1 | 04-03-2015 |
| | | JP 2015517085 A | 18-06-2015 |
| | | JP 2018086654 A | 07-06-2018 |
| | | KR 20150005643 A | 14-01-2015 |
| | | SG 11201406902R A | 27-11-2014 |
| | | US 2015135661 A1 | 21-05-2015 |
| | | WO 2013163379 A1 | 31-10-2013 |
| US 2016992 A | 08-10-1935 | AUCUN | |
| US 2017246575 A1 | 31-08-2017 | AR 107747 A1 | 30-05-2018 |
| | | US 2017246575 A1 | 31-08-2017 |
| | | US 2018154295 A1 | 07-06-2018 |

EPO FORM P0460

Pour tout renseignement concernant cette annexe : voir Journal Officiel de l'Office européen des brevets, No.12/82

**EP 3 524 332 A1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3030299
- FR 2656536